# EUROPEAN PATENT APPLICATION

(11) **EP 3 125 513 A1**
(43) Date of publication of application: **01.02.2017**
(21) Application number: 14887122.1
(22) Date of filing: 30.05.2014
(51) Int. Cl.: H04M 1/73, H04W 52/02, H04W 76/00

(54) **MULTI-MODE POWER SAVING MULTIMEDIA TRANSMISSION METHOD AND SYSTEM**

(30) Priority: 28.03.2014 CN 201410121850
(71) Applicant: Huizhou TCL Mobile Communication Co., Ltd., Huizhou, Guangdong 516006 (CN)
(72) Inventor: XIE, Zhuolun, Hui Zhou Guangdong 516006 (CN); ZHANG, Jie, Hui Zhou Guangdong 516006 (CN)
(74) Representative: Brachmann, Roland W.
(86) International application number: PCT/CN2014/078865
(87) International publication number: WO 2015/143776

(57) **Abstract**

The present invention provides a multi-mode power saving multimedia transmission method and system. The method comprises: when a multimedia terminal receives an operation instruction of a user and is powered on, the multimedia terminal obtains a list of multiple available connection protocols in a protocol implementation layer between an application interface layer and a hardware implementation layer of the multimedia terminal; the multimedia terminal obtains and stores a most power saving connection protocol in the list of the multiple available connection protocols according to power-saving priorities of the connection protocols, and connects to another terminal by using the current most power saving connection protocol; and when the time in which there is no data transmission between the multimedia terminal and another terminal exceeds a preset time threshold, the multimedia terminal is disconnected from another terminal. Because the most power saving connection protocol is selected and used in the multimedia terminal for connecting to another terminal and the multimedia terminal and another terminal are disconnected when there is no data transmission between the them within a period of time, connection power consumption of the multimedia terminal is effectively lowered, the working current is optimized, and the standby time and working time of the multimedia terminal are greatly increased.

## Description

### Field of the Invention

The present invention relates to the wireless multimedia field, and in particular relates to a multimode and power-saving method of multimedia transmission and a system thereof.

### Description of the Related Art

Wireless communications and transmission technologies are taking the place of wired communications in daily life at an extremely fast pace. Nowadays, wireless charging makes it unnecessary for many smart phone users to plug into and out of chargers every day, wireless electric switches are increasingly popular in young families, and furthermore, Bluetooth sound systems and headphones are extensively used among young people and business people; at the same time, wireless projection adapters, TVs and projectors of various standards have become new favorites on the market of consumer electronics, such as AirPlay (a wireless communications technology developed by Apple), DLNA (DIGITAL LIVING NETWORK ALLIANCE launched by Sony, Intel and Microsoft to address interconnection among wireless networks and wired networks including PC, consumer electric appliances, and mobile devices such that it is possible to realize unlimited sharing and growth of digital media and content services), MiraCast (a Wi-Fi CERTIFIED Miracas certification program announced and launched by the Wi-Fi Alliance on September 19, 2012, Miracast apparatuses provide simplified discovery and settings, and users can transmit videos among the apparatuses rapidly). As a result, people can get rid of the restriction by wired power transmission and data transmission and achieve the freedom of using electronic apparatuses at any time and at any place.

Along with the update of application contents via wireless transmission, however, issues like power consumption and usage time of wireless transmission cannot meet user demand. A cell phone connected to a Bluetooth stereo headphone will have 15% to 20% less usage time than a cell phone with the Bluetooth function closed; the difference of system average current is around 200 mA between a cell phone with wifi on and a cell phone with wifi off, and the usage time is shortened by 40%. In wireless projection applications, the average standby and operating current are not optimized for a regular standard wireless projection adapter with the typical value between 300 mA and 500 mA. Such a power management strategy is not favorable for the effective use of energy and environmental protection.

Therefore, the prior art is still in need of improvement and development.

### Summary of the Invention

In light of the above drawbacks of the prior art, the object of the present invention is to provide a multimode and power-saving method of multimedia transmission and a system thereof, thereby solving the problems of the prior art that multimedia terminals have relatively high power consumption in wireless transmission, the operating current is not optimized and the average standby time is short.

The technical solution according to the present invention is as follows:

A multimode and power-saving method of multimedia transmission, wherein the method comprises steps of:
A. When a multimedia terminal is turned on upon receiving an operational command from a user, acquiring a list of a plurality of available connection protocols in the protocol implementation layer between the application interface layer and the hardware implementation layer of the multimedia terminal;
B. Upon receiving an operational command from the user, the multimedia terminal acquires and saves the most power-saving connection protocol according to the power-saving priority of each connection protocol in said list of a plurality of available connection protocols, and establishes connection with another terminal using the current most power-saving connection protocol;
C. When the time that said multimedia terminal has not conducted data transmission with another terminal exceeds a preset time threshold value, said multimedia terminal is disconnected from another terminal.

The multimode and power-saving method of multimedia transmission, wherein, prior to Step A, it further comprises:
S. Upon receiving an operational command from the user, the multimedia terminal sets a time threshold value.

The multimode and power-saving method of multimedia transmission, wherein Step B specifically comprises:
B 1. The multimedia terminal acquires the most power-saving connection protocol according to the power-saving priority of each connection protocol in said list of a plurality of available connection protocols;
B2. Acquiring the data structure of the most power-saving connection protocol and saving the data structure;
B3. The multimedia terminal establishes connection with another terminal according to the most power-saving connection protocol and starts to conduct data transmission.

The multimode and power-saving method of multimedia transmission, wherein it further comprises after Step C:
D. When the multimedia terminal is disconnected from another terminal, the multimedia terminal receives an operational command from the user to re-establish the connection between the multimedia terminal and another terminal and to conduct data transmission.

The multimode and power-saving method of multimedia transmission, wherein said list of a plurality of available connection protocols comprises: Bluetooth 2.0/2.1/4.0/4.1 protocols, 802.11 a/b/g/n/ac/ah protocols, low power consumption wifi protocol and Zigbee Protocol.

The multimode and power-saving method of multimedia transmission, wherein the data structure comprises four fields, unified connection ID, application interface type, current connection status and currently selected protocol type.

A multimode and power-saving system of multimedia transmission, wherein it comprises:
- A connection protocol acquisition module for, when a multimedia terminal is turned on upon receiving an operational command from a user, acquiring a list of a plurality of available connection protocols in the protocol implementation layer between the application interface layer and the hardware implementation layer of the multimedia terminal;
- A connection establishment module for, when the multimedia terminal receives an operational command from the user, acquiring and saving the most power-saving connection protocol according to the power-saving priority of each connection protocol in said list of a plurality of available connection protocols, and establishing connection with another terminal using the current most power-saving connection protocol;
- A connection breaking module for, when the time that said multimedia terminal has not conducted data transmission with another terminal exceeds a preset time threshold value, breaking the connection between said multimedia terminal and another terminal.

The multimode and power-saving system of multimedia transmission, wherein it further comprises:
- A setting module for, when the multimedia terminal receives an operational command from the user, setting a time threshold value;
- A connection restoring module for, when the multimedia terminal is disconnected from another terminal, the multimedia terminal to receive an operational command from the user to re-establish the connection between the multimedia terminal and another terminal and to conduct data transmission.

The multimode and power-saving system of multimedia transmission, wherein the connection establishment module specifically comprises:
- A protocol screening unit for the multimedia terminal to acquire the most power-saving connection protocol according to the power-saving priority of each connection protocol in said list of a plurality of available connection protocols;
- A protocol saving unit for acquiring the data structure of the most power-saving connection protocol and saving the data structure;
- A connection unit for the multimedia terminal to establish connection with another terminal according to the most power-saving connection protocol and start to conduct data transmission.

The multimode and power-saving system of multimedia transmission, wherein said list of a plurality of available connection protocols comprises: Bluetooth 2.0/2.1/4.0/4.1 protocols, 802.11 a/b/g/n/ac/ah protocols, low power consumption wifi protocol and Zigbee Protocol.

The present invention provides a multimode and power-saving method of multimedia transmission and a system thereof, the method comprising: when a multimedia terminal is turned on upon receiving an operational command from a user, acquiring a list of a plurality of available connection protocols in the protocol implementation layer between the application interface layer and the hardware implementation layer of the multimedia terminal; in said list of a plurality of available connection protocols, acquiring and saving the most power-saving connection protocol according to the power-saving priority of each connection protocol, and establishing connection with another terminal using the current most power-saving connection protocol; when the time that said multimedia terminal has not conducted data transmission with another terminal exceeds a preset time threshold value, said multimedia terminal is disconnected from another terminal. Since the most power-saving connection protocol is selected in the multimedia terminal for connection with another terminal and the two are disconnected if no data transmission takes place within a period of time, it effectively reduces the connection power consumption and optimizes the operating current, and greatly improves the standby and working time of the multimedia terminal.

### Brief Description of the Drawings

- Fig. 1: is a flow chart of a preferred embodiment of the multimode and power-saving method of multimedia transmission according to the present invention.
- Fig.2: is a detailed flow chart of a multimedia terminal receiving an operational command from a user to acquire and save the most power-saving connection protocol, and to establish connection with another terminal according to the present invention.
- Fig.3: is a structural block diagram of a preferred embodiment of the multimode and power-saving system of multimedia transmission according to the present invention.

### Detailed Description of the Embodiments

The present invention provides a method and a system for a mobile terminal camera to automatically adapt to scenarios. To make the object, technical solution and effect of the present invention clearer and more specific, the present invention will be further described in detail below. It should be understood that the specific embodiments herein are only used to describe the present invention, rather than to limit the present invention.

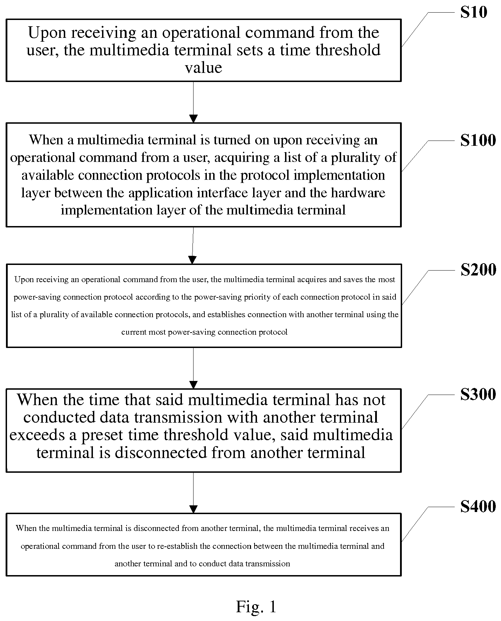

Please refer to Fig. 1, and Fig. 1 is a flow chart of a preferred embodiment of the multimode and power-saving method of multimedia transmission according to the present invention. As shown in Fig. 1, the multimode and power-saving method of multimedia transmission comprises the following steps of:
S100. When a multimedia terminal is turned on upon receiving an operational command from a user, acquiring a list of a plurality of available connection protocols in the protocol implementation layer between the application interface layer and the hardware implementation layer of the multimedia terminal;
In Step S100, by acquiring a list of a plurality of available connection protocols in the multimedia terminal, the multimedia terminal can select one connection protocol in the list to establish connection with another terminal and to conduct data transmission.

S200. Upon receiving an operational command from the user, the multimedia terminal acquires and saves the most power-saving connection protocol according to the power-saving priority of each connection protocol in said list of a plurality of available connection protocols, and establishes connection with another terminal using the current most power-saving connection protocol;
In Step S200, it is a power strategy of the terminal optimized from the protocol layer that the multimedia terminal selects the most power-saving connection protocol thereof according to the power-saving priority of each connection protocol, and establishes connection with another terminal using the current most power-saving connection protocol.

S300. When the time that said multimedia terminal has not conducted data transmission with another terminal exceeds a preset time threshold value, said multimedia terminal is disconnected from another terminal.

In the preferred embodiment of the present invention, a plurality of available connection protocols are first acquired in the multimedia terminal, and the most power-saving connection protocol thereof is selected for connection with another terminal, which is to select the most power-saving connection protocol in the protocol implementation layer; then during the course of data transmission between the multimedia terminal and another terminal, the connection of the two is broken after a period of time that there is no data transmission between the two, to put it in a plain way, the data connection module of the multimedia terminal enters the sleep mode, which achieves power saving through sleeping in the hardware implementation layer.

In the embodiment, furthermore, as shown in Fig. 1, prior to that a list of a plurality of available connection protocols is acquired in Step S100, it further comprises:
S10. Upon receiving an operational command from the user, the multimedia terminal sets a time threshold value.

Apparently, the time threshold value herein is defined and set by the user, which may be set to always power-saving link, 10 min, 5 min, 2 min and 1 min, when it is determined that the duration of the state that there is no data transmission between the multimedia terminal and another terminal exceeds the time threshold value defined and set by the user, the data connection module of the multimedia terminal enters the sleep mode. When the data connection module of the multimedia terminal is in the sleep mode, the user may set a second time threshold value according to the actual usage need, when the duration of the broken connection between the multimedia terminal and another terminal exceeds the second time threshold value, the connection between the multimedia terminal and another terminal is restored; similarly, the second time threshold value is not set. Instead, the connection between the multimedia terminal and another terminal is restored in a manual waking manner.

In the embodiment, furthermore, as shown in Fig. 1, after that said multimedia terminal is disconnected from another terminal in Step S300, it further comprises:
S400. When the multimedia terminal is disconnected from another terminal, the multimedia terminal receives an operational command from the user to re-establish the connection between the multimedia terminal and another terminal and to conduct data transmission.

In Step S400, the multimedia terminal is awakened from the sleep mode by means of manual operations, which can restore the data connection with another terminal in a very short time, and further conduct data transmission. The effective power management strategy according to Steps S100 - S400, there is no impact on normal data transmission process and can significantly extend the standby time and working time of the multimedia terminal.

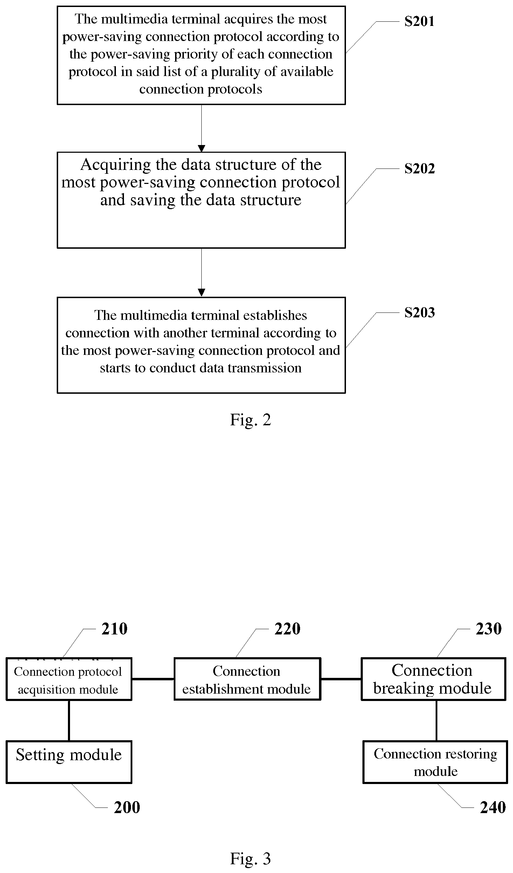

In Step S200, as shown in Fig.2, specific steps that the multimedia terminal receives an operational command from a user to acquire and save the most power-saving connection protocol, and to establish connection with another terminal comprise:
S201. The multimedia terminal acquires the most power-saving connection protocol according to the power-saving priority of each connection protocol in said list of a plurality of available connection protocols;
S202. Acquiring the data structure of the most power-saving connection protocol and saving the data structure;
S203. The multimedia terminal establishes connection with another terminal according to the most power-saving connection protocol and starts to conduct data transmission.

In the preferred embodiment of the present invention, said list of a plurality of available connection protocols comprises: Bluetooth 2.0/2.1/4.0/4.1 protocols, 802.11 a/b/g/n/ac/ah protocols, low power consumption wifi protocol and Zigbee Protocol, wherein:
In the Bluetooth 2.0/2.1 protocols, Bluetooth 2.0 is an improved version of 1.2, the transmission rate is in the range of 1.8M/s - 2.1M/s, there is a duplex operation mode, i.e. audio communications and transmission of files or images are carried out simultaneously;
Relative to Bluetooth 2.0, Bluetooth 2.1 is added with the "Sniff Subrating" technology, i.e. the "low power consumption monitoring mode". For hardware devices that require continuous transmission of data streams, such as keyboard, mouse, watch, etc., this technology can extend the battery life by at most 5 times. Bluetooth 2.1 will also greatly simplify the pairing process among apparatuses. In the Bluetooth 4.0/4.1 protocols, Bluetooth 4.0 is an upgraded version of 3.0, and relative to the 3.0 version, it is more power saving, has a lower cost, 3 ms low delay, very long effective connection distance, and AES-128 encryption, and is usually used on apparatuses like Bluetooth headphones and Bluetooth loudspeakers. The most important feature of Bluetooth 4.0 is power saving, the extremely low operation and standby power consumptions enable a button battery to continuously run for as long as several years. Bluetooth 4.1 is an upgraded version of 4.0, has a faster batch data transmission rate, and at the same time, has more powerful communication functions. The 802.11b/g protocol, low power consumption wifi protocol and 802.11ah protocol are all one of the standards for wireless local area networks with differences only in operation frequency band, data transmission rate and power saving feature.

In the embodiment, furthermore, the data structure comprises four fields, unified connection ID, application interface type, current connection status and currently selected protocol type, wherein the unified connection ID is generated sequentially; the application interface type stores the calling type of application interface that is used as the basis for selection of available connection; the current connection status comprises several statuses, including unpaired, connection ready, in transmission, remote response and connection broken; the currently selected protocol is the type of the selected transmission protocol that is the most effective.

The present invention will be further described below with reference to a specific application example:
Application example: a presenter uses a wireless projector to project a presentation from a laptop computer;
1.1 The laptop computer acquires a list of a plurality of available connection protocols in the protocol implementation layer between the application interface layer and the hardware implementation layer of the multimedia terminal, wherein the list comprises: Bluetooth 2.0/2.1/4.0/4.1 protocols, 802.11 a/b/g/n/ac/ah protocols, low power consumption wifi protocol and Zigbee Protocol;
1.2 The laptop computer selects the most power-saving connection protocol according to the power-saving priorities of all connection protocols in the list of available connection protocols, such as the low power consumption wifi protocol, and when the protocol is selected, connection is established between the wireless connection module at the source end of the laptop computer and the wireless connection module at the receiving end of the wireless projector according to the selected connection protocol;
1.3 The laptop computer transmits the data of the current page of the presentation to the wireless projector via the wireless connection module at the source end, the data of the current page of the presentation is cached in the memory module of the wireless projector, and at this time, the presenter may talk about the current page for a long time without changing the page, then it is determined if the time that there is no data transmission between the laptop computer and the wireless projector exceeds a preset time threshold value, if yes, both the wireless connection module at the source end and the wireless connection module at the receiving end enter the sleep mode, and the connection between the laptop computer and the wireless projector is temporarily broken;
1.4 When the presenter stays on discussing the content of the current page for a long time, the connection between the laptop computer and the wireless projector continues to be broken; when the presenter operates the laptop computer to choose another page, both the wireless connection module at the source end and the wireless connection module at the receiving end are immediately awakened from the sleep mode, the laptop computer re-establishes connection with the wireless projector and conducts data transmission.

It can be seen from the above that, since the power saving strategy is employed at both the protocol layer and the hardware layer, the standby time and working time of the multimedia terminal are significantly extended.

Based on the above method, the present invention further provides a multimode and power-saving system of multimedia transmission, as shown in Fig.3, comprising:

A connection protocol acquisition module 210 for, when a multimedia terminal is turned on upon receiving an operational command from a user, acquiring a list of a plurality of available connection protocols in the protocol implementation layer between the application interface layer and the hardware implementation layer of the multimedia terminal; see the above description for details.

A connection establishment module 220 for, when the multimedia terminal receives an operational command from the user, acquiring and saving the most power-saving connection protocol according to the power-saving priority of each connection protocol in said list of a plurality of available connection protocols, and establishing connection with another terminal using the current most power-saving connection protocol; see the above description for details.

A connection breaking module 230 for, when the time that said multimedia terminal has not conducted data transmission with another terminal exceeds a preset time threshold value, breaking the connection between said multimedia terminal and another terminal; see the above description for details.

In the embodiment, furthermore, as shown in Fig.3, the multimode and power-saving system of multimedia transmission further comprises:

A setting module 200 for, when the multimedia terminal receives an operational command from the user, setting a time threshold value; see the above description for details.

A connection restoring module 240 for, when the multimedia terminal is disconnected from another terminal, the multimedia terminal to receive an operational command from the user to re-establish the connection between the multimedia terminal and another terminal and to conduct data transmission; see the above description for details.

In the embodiment, the connection establishment module 220 specifically comprises:

A protocol screening unit for the multimedia terminal to acquire the most power-saving connection protocol according to the power-saving priority of each connection protocol in said list of a plurality of available connection protocols; see the above description for details.

A protocol saving unit for acquiring the data structure of the most power-saving connection protocol and saving the data structure; see the above description for details.

A connection unit for the multimedia terminal to establish connection with another terminal according to the most power-saving connection protocol and start to conduct data transmission; see the above description for details.

In the preferred embodiment of the present invention, said list of a plurality of available connection protocols comprises: Bluetooth 2.0/2.1/4.0/4.1 protocols, 802.11 a/b/g/n/ac/ah protocols, low power consumption wifi protocol and Zigbee Protocol.

In summary, the present invention provides a multimode and power-saving method of multimedia transmission and a system thereof, the method comprising: when a multimedia terminal is turned on upon receiving an operational command from a user, acquiring a list of a plurality of available connection protocols in the protocol implementation layer between the application interface layer and the hardware implementation layer of the multimedia terminal; in said list of a plurality of available connection protocols, acquiring and saving the most power-saving connection protocol according to the power-saving priority of each connection protocol, and establishing connection with another terminal using the current most power-saving connection protocol; when the time that said multimedia terminal has not conducted data transmission with another terminal exceeds a preset time threshold value, said multimedia terminal is disconnected from another terminal. Since the most power-saving connection protocol is selected in the multimedia terminal for connection with another terminal and the two are disconnected if no data transmission takes place within a period of time, it effectively reduces the connection power consumption and optimizes the operating current, and greatly improves the standby and working time of the multimedia terminal.

It should be understood that applications of the present invention are not limited to the above examples. To those skilled in the art, improvements or modifications may be made according to the above description, and all of these improvements or modifications shall be encompassed by the appended claims of the present invention.

## Claims

1. A multimode and power-saving method of multimedia transmission, **characterized in that** the method comprises steps of:
A. When a multimedia terminal is turned on upon receiving an operational command from a user, acquiring a list of a plurality of available connection protocols in the protocol implementation layer between the application interface layer and the hardware implementation layer of the multimedia terminal;
B. Upon receiving an operational command from the user, the multimedia terminal acquires and saves the most power-saving connection protocol according to the power-saving priority of each connection protocol in said list of a plurality of available connection protocols, and establishes connection with another terminal using the current most power-saving connection protocol;
C. When the time that said multimedia terminal has not conducted data transmission with another terminal exceeds a preset time threshold value, said multimedia terminal is disconnected from another terminal.

2. The multimode and power-saving method of multimedia transmission according to Claim 1, **characterized in that**, prior to Step A, it further comprises:
S. Upon receiving an operational command from the user, the multimedia terminal sets a time threshold value.

3. The multimode and power-saving method of multimedia transmission according to Claim 1, **characterized in that** Step B specifically comprises:
B 1. The multimedia terminal acquires the most power-saving connection protocol according to the power-saving priority of each connection protocol in said list of a plurality of available connection protocols;
B2. Acquiring the data structure of the most power-saving connection protocol and saving the data structure;
B3. The multimedia terminal establishes connection with another terminal according to the most power-saving connection protocol and starts to conduct data transmission.

4. The multimode and power-saving method of multimedia transmission according to Claim 1, **characterized in that** it further comprises after Step C:
D. When the multimedia terminal is disconnected from another terminal, the multimedia terminal receives an operational command from the user to re-establish the connection between the multimedia terminal and another terminal and to conduct data transmission.

5. The multimode and power-saving method of multimedia transmission according to Claim 1, **characterized in that** said list of a plurality of available connection protocols comprises: Bluetooth 2.0/2.1/4.0/4.1 protocols, 802.11 a/b/g/n/ac/ah protocols, low power consumption wifi protocol and Zigbee Protocol.

6. The multimode and power-saving method of multimedia transmission according to Claim 3, **characterized in that** the data structure comprises four fields, unified connection ID, application interface type, current connection status and currently selected protocol type.

7. A multimode and power-saving method of multimedia transmission, **characterized in that** the method comprises steps of:
S. Upon receiving an operational command from the user, the multimedia terminal sets a time threshold value;
A. When a multimedia terminal is turned on upon receiving an operational command from the user, acquiring a list of a plurality of available connection protocols in the protocol implementation layer between the application interface layer and the hardware implementation layer of the multimedia terminal;
B. Upon receiving an operational command from the user, the multimedia terminal acquires and saves the most power-saving connection protocol according to the power-saving priority of each connection protocol in said list of a plurality of available connection protocols, and establishes connection with another terminal using the current most power-saving connection protocol;
C. When the time that said multimedia terminal has not conducted data transmission with another terminal exceeds a preset time threshold value, said multimedia terminal is disconnected from another terminal;
D. When the multimedia terminal is disconnected from another terminal, the multimedia terminal receives an operational command from the user to re-establish the connection between the multimedia terminal and another terminal and to conduct data transmission.

8. The multimode and power-saving method of multimedia transmission according to Claim 7, **characterized in that** Step B specifically comprises:
B 1. The multimedia terminal acquires the most power-saving connection protocol according to the power-saving priority of each connection protocol in said list of a plurality of available connection protocols;
B2. Acquiring the data structure of the most power-saving connection protocol and saving the data structure;
B3. The multimedia terminal establishes connection with another terminal according to the most power-saving connection protocol and starts to conduct data transmission.

9. The multimode and power-saving method of multimedia transmission according to Claim 7, **characterized in that** said list of a plurality of available connection protocols comprises: Bluetooth 2.0/2.1/4.0/4.1 protocols, 802.11 a/b/g/n/ac/ah protocols, low power consumption wifi protocol and Zigbee protocol.

10. The multimode and power-saving method of multimedia transmission according to Claim 7, **characterized in that** the data structure comprises four fields: unified connection ID, application interface type, current connection status and currently selected protocol type.

11. The multimode and power-saving method of multimedia transmission according to Claim 7, **characterized in that** the time threshold value in Step S is 10 min, 5 min, 2 min or 1 min.

12. The multimode and power-saving method of multimedia transmission according to Claim 7, **characterized in that** Step S further comprises: when the data connection module of the multimedia terminal is in the sleep mode, a second time threshold value may be further set according to the actual usage need, when the duration of the broken connection between the multimedia terminal and another terminal exceeds the second time threshold value, the connection between the multimedia terminal and another terminal is restored; similarly, the second time threshold value may not be set. Instead, the connection between the multimedia terminal and another terminal is restored in a manual waking manner.

13. A multimode and power-saving method of multimedia transmission, **characterized in that** the method comprises steps of:
S. Upon receiving an operational command from the user, the multimedia terminal sets a time threshold value;
A. When a multimedia terminal is turned on upon receiving an operational command from the user, acquiring a list of a plurality of available connection protocols in the protocol implementation layer between the application interface layer and the hardware implementation layer of the multimedia terminal;
B. Upon receiving an operational command from the user, the multimedia terminal acquires and saves the most power-saving connection protocol according to the power-saving priority of each connection protocol in said list of a plurality of available connection protocols, and establishes connection with another terminal using the current most power-saving connection protocol;
C. When the time that said multimedia terminal has not conducted data transmission with another terminal exceeds a preset time threshold value, said multimedia terminal is disconnected from another terminal;
Step S further comprises: when the data connection module of the multimedia terminal is in the sleep mode, a second time threshold value may be further set according to the actual usage need, when the duration of the broken connection between the multimedia terminal and another terminal exceeds the second time threshold value, the connection between the multimedia terminal and another terminal is restored; similarly, the second time threshold value may not be set. Instead, the connection between the multimedia terminal and another terminal is restored in a manual waking manner.

14. A multimode and power-saving system of multimedia transmission, **characterized in that** it comprises:
- A connection protocol acquisition module for, when a multimedia terminal is turned on upon receiving an operational command from a user, acquiring a list of a plurality of available connection protocols in the protocol implementation layer between the application interface layer and the hardware implementation layer of the multimedia terminal;
- A connection establishment module for, when the multimedia terminal receives an operational command from the user, acquiring and saving the most power-saving connection protocol according to the power-saving priority of each connection protocol in said list of a plurality of available connection protocols, and establishing connection with another terminal using the current most power-saving connection protocol;
- A connection breaking module for, when the time that said multimedia terminal has not conducted data transmission with another terminal exceeds a preset time threshold value, breaking the connection between said multimedia terminal and another terminal.

15. The multimode and power-saving system of multimedia transmission according to Claim 14, **characterized in that** it further comprises:
- A setting module for, when the multimedia terminal receives an operational command from the user, setting a time threshold value;
- A connection restoring module for, when the multimedia terminal is disconnected from another terminal, the multimedia terminal to receive an operational command from the user to re-establish the connection between the multimedia terminal and another terminal and to conduct data transmission.

16. The multimode and power-saving system of multimedia transmission according to Claim 14, **characterized in that** the connection establishment module specifically comprises:
- A protocol screening unit for the multimedia terminal to acquire the most power-saving connection protocol according to the power-saving priority of each connection protocol in said list of a plurality of available connection protocols;
- A protocol saving unit for acquiring the data structure of the most power-saving connection protocol and saving the data structure;
- A connection unit for the multimedia terminal to establish connection with another terminal according to the most power-saving connection protocol and start to conduct data transmission.

17. The multimode and power-saving system of multimedia transmission according to Claim 14, **characterized in that** said list of a plurality of available connection protocols comprises: Bluetooth 2.0/2.1/4.0/4.1 protocols, 802.11 a/b/g/n/ac/ah protocols, low power consumption wifi protocol and Zigbee protocol.
